# EUROPEAN PATENT APPLICATION

(11) **EP 4 611 344 A1**
(43) Date of publication of application: **03.09.2025**
(21) Application number: 23884710.7
(22) Date of filing: 26.10.2023
(51) Int. Cl.: H04L 47/125

(54) **PACKET PROCESSING METHOD AND RELATED APPARATUS**

(30) Priority: 31.10.2022 CN 202211366416
(71) Applicant: Huawei Technologies Co., Ltd., Shenzhen, Guangdong 518129 (CN)
(72) Inventor: ZHENG, Hewen, Shenzhen, Guangdong 518129 (CN); DENG, Xiaojun, Shenzhen, Guangdong 518129 (CN)
(74) Representative: Körber, Martin Hans
(86) International application number: PCT/CN2023/126724
(87) International publication number: WO 2024/093778

(57) **Abstract**

Embodiments of this application provide a packet processing method and a related apparatus. The method includes: After a packet arrives at a network device, the network device allocates a load balancing identifier of the packet based on traffic characteristic information of the packet, where the load balancing identifier indicates a load balancing algorithm corresponding to the packet; and the network device determines an egress port of the packet based on the load balancing identifier of the packet by using the load balancing algorithm corresponding to the packet, where the egress port of the packet is used to forward the packet. In a scenario in which a plurality of services coexist in a network, the network device may allocate corresponding load balancing identifiers to packets of different services, and then perform corresponding load balancing processing based on the load balancing identifiers, to improve a throughput of the entire network. In this way, the problem that a current network device supports only L2 or L3 globally unique network load balancing configuration is resolved, so that packets with different traffic characteristics are converged on a same network device, and the throughput of the entire network is maximized.

## Description

This application claims priority to Chinese Patent Application No. CN202211366416.6, filed with the China National Intellectual Property Administration on October 31, 2022, and entitled "PACKET PROCESSING METHOD AND RELATED APPARATUS", which is incorporated herein by reference in its entirety.

### TECHNICAL FIELD

This application relates to the field of communication technologies, and in particular, to a packet processing method and a related apparatus.

### BACKGROUND

In a data center network, when a sum of traffic of a plurality of data flows sent by a transmit end is greater than a port capacity of a receive end, congestion occurs. Congestion causes a packet loss. Therefore, to avoid the packet loss, a network device in the data center network needs to perform traffic load balancing (which is referred to as load balancing for short below) on network traffic (which is referred to as traffic for short below). Load balancing (load balancing or load sharing) means that traffic is evenly sent over a plurality of links.

For implementing load balancing, a Clos (CLOS) network is used as an example. In a network that uses a layer 3 (layer 3, L3) identifier for table lookup and forwarding (namely, a network that uses a network layer identifier for table lookup and forwarding), for example, in an internet protocol (Internet Protocol, IP) network, an application scenario of a load balancing algorithm is mainly equal-cost multi-path routing (Equal-Cost Multi-Path, ECMP). In a network that uses a layer 2 (Layer 2, L2) identifier for table lookup and forwarding (namely, a network that uses a link layer for table lookup and forwarding), for example, in an Ethernet switching network, an application scenario of a load balancing algorithm is mainly link aggregation (Link Aggregation, LAG).

A current network device supports configuration of only one load balancing algorithm. That is, the network device supports only ECMP or LAG. In a scenario in which a plurality of services coexist in a network, for example, an L3 service and an L2 service coexist, the network device cannot perform load balancing on the L3 service and the L2 service simultaneously. As a result, a throughput of the entire network decreases.

### SUMMARY

According to a first aspect, an embodiment of this application provides a packet processing method. The method includes:
a packet arrives at a network device;
the network device allocates a load balancing identifier of the packet based on traffic characteristic information of the packet, where the load balancing identifier indicates a load balancing algorithm corresponding to the packet; and
the network device determines an egress port of the packet based on the load balancing identifier of the packet by using the load balancing algorithm corresponding to the packet, where the egress port of the packet is used to forward the packet.

Specifically, in this embodiment of this application, packets are classified based on traffic characteristics, and different types of traffic are allocated with different load balancing identifiers. The different load balancing identifiers correspond to different load balancing configuration information. The network device determines corresponding load balancing configuration information based on the load balancing identifier, and processes the packet based on the load balancing configuration information to obtain the egress port of the packet, to implement load balancing processing for traffic. A plurality of pieces of load balancing configuration information corresponding to a plurality services in a running state may coexist, hybrid traffic may be classified, and load balancing processing may be separately performed on the hybrid traffic based on different load balancing configuration information that is run independently.

In an example, on a packet processing pipeline in the network device, the network device may be divided into a plurality of functional modules by function, including the following modules. 1. Packet header processing module (packet parser): This module is responsible for extracting field information of a plurality of packet headers from a packet, for example, field information of packet headers such as a Layer 2 header, a Layer 3 header, and a transport layer header, and supplementing description information such as information of a physical interface at which the packet arrives, for subsequent processing by the module. 2. Tunnel termination module (tunnel termination): This module is used for terminating a packet that uses a switching chip as a tunnel endpoint. 3. VLAN processing module (VLAN processing): This mode is used for processing a virtual local area network VLAN function, such as VLAN tagging, untagging, or transformation. 4. Layer 2 forwarding module (Layer 2 switching): This module is used for processing a Layer 2 function, for example, learning a source MAC address, performing table lookup and forwarding based on a destination MAC address, and providing a Layer 2 switching service. A Layer 2 load balancing function is implemented in this module. 5. Layer 3 forwarding module (Layer 3 routing): This module is used for performing a Layer 3 function, for example, performing table lookup through longest match based on a destination IP address, and providing a Layer 3 routing service. A Layer 3 load balancing function is implemented in this module. 6. Ingress ACL (ingress ACL) processing module: This module is used for implementing functions such as an access control list (ACL), differentiated services, a quality of service QoS classification application, and next-hop modification based on policy routing.

In a possible example, the packet header processing module extracts the traffic characteristic information of the packet. In the Layer 2 forwarding module and the Layer 3 forwarding module, the load balancing identifier is allocated to the packet based on the traffic characteristic information of the packet, and then the egress port of the packet is obtained through computing, to implement load balancing processing on the packet. According to the packet processing method provided in this embodiment of this application, after the packet arrives at the network device, the network device allocates the load balancing identifier of the packet based on the traffic characteristic information of the packet. The load balancing identifier indicates the load balancing algorithm corresponding to the packet. The network device determines the egress port of the packet based on the load balancing identifier of the packet by using the load balancing algorithm corresponding to the packet. The egress port of the packet is used to forward the packet. The network device can allocate different load balancing identifiers to different packets. Then, the network device determines the egress port of the packet based on the load balancing identifier by using the corresponding load balancing algorithm, to implement load balancing processing on the packet. In a scenario in which a plurality of services coexist in a network, the network device may perform corresponding load balancing processing on packets of different services, to improve a throughput of the entire network. In this way, the problem that a current network device supports only L2 or L3 globally unique network load balancing configuration is resolved, so that packets with different traffic characteristics are converged on a same network device, and the throughput of the entire network is maximized. According to this solution, the hybrid traffic may be segmented into a plurality of fine-grained sub-traffic topologies, and each sub-traffic topology executes independent load balancing configuration information.

In a possible implementation of the first aspect, that the network device fills the load balancing identifier into the packet includes: The network device fills the load balancing identifier into a packet descriptor of the packet, where the packet descriptor is used to record packet header information of the packet. The load balancing identifier is an explicit identifier. Specifically, the information recorded by the packet descriptor includes but is not limited to: Ethernet header information, IP header information, TCP/UDP header information, location information of the packet stored in a chip buffer (buffer), length information of the packet, egress port information of the packet, and the like.

For example, when the network device in this embodiment of this application performs implementation as a chip, that the network device allocates a load balancing identifier to the packet includes: The network device (chip) fills (or adds) the load balancing identifier into the packet descriptor corresponding to the packet.

In a possible implementation, the network device fills the load balancing identifier into a reserved field of the packet.

In another possible implementation, the network device fills the load balancing identifier into a payload (payload) of the packet. It may be understood that a region in which the load balancing identifier is filled is not limited in this embodiment of this application.

The load balancing identifier is introduced to greatly lower requirements for a quantity of chip registers and an area of a logic processing circuit, and reduce hardware costs.

In a possible implementation of the first aspect, that the network device determines an egress port of the packet based on the load balancing identifier of the packet by using the load balancing algorithm corresponding to the packet includes: The network device determines, based on the load balancing identifier, the load balancing algorithm corresponding to the packet; the network device determines, based on the load balancing algorithm corresponding to the packet, a target hash function used for the packet and a target hash key composition member of the packet; the network device obtains a target hash value through computing based on the target hash function and the target hash key composition member; and the network device determines the egress port of the packet based on the target hash value.

Specifically, after the packet arrives at the network device, the network device uses related information recorded in the packet descriptor of the packet as the traffic characteristic information of the packet. Then, the network device selects, from matching information of a plurality of pieces of load balancing configuration information, matching information that matches the packet descriptor (traffic characteristic information). The network device allocates the load balancing identifier corresponding to the load balancing configuration information to the packet. The network device fills the load balancing identifier into the packet descriptor of the packet.

In a possible implementation of the first aspect, that the network device determines, based on the load balancing identifier, the target hash function used for the packet and the target hash key composition member of the packet includes: The network device determines, based on the load balancing identifier, a hash function selection control word corresponding to the packet and a hash key member selection control word corresponding to the packet; the network device determines, based on the hash function selection control word corresponding to the packet, the target hash function used for the packet; and the network device selects a target field from the packet based on the hash key member selection control word corresponding to the packet, where the target field is used to build the target hash key composition member of the packet.

Specifically, an example in which the network device responsible for building a hash key is a chip is used for description.

In an example, the hash key has 13 members in total, and each member is 16 bits wide, namely, 2 bytes wide. A 1^{st} member is a source virtual port identifier of a virtual network tag (Virtual Network Tag, VNTag). A 2^{nd} member is a destination virtual port identifier of the VNTag. A 3^{rd} member is an identifier of the chip in a system. A 4^{th} member is an identifier of a physical interface of the chip at which the packet arrives. A 5^{th} member is a network layer protocol identifier of the packet. A 6^{th} member is a destination port of a transport layer of the packet. A 7^{th} member is a source port of the transport layer of the packet. An 8^{th} member is a VLAN identifier of the packet. A 9^{th} member is least significant 16 bits of a network layer destination address of the packet. A 10^{th} member is most significant 16 bits of the network layer destination address of the packet. An 11^{th} member is least significant 16 bits of a network layer source address of the packet. A 12^{th} member is most significant 16 bits of the network layer source address of the packet. A 13^{th} member is a congestion notification tag (Congestion Notification tag, CNTag).

Some of the member information comes from fields carried in the packet, for example, the network layer destination address, the network layer source address, the destination port of the transport layer, the source port of the transport layer, the network layer protocol identifier, the CNTag, the VNTag, and the VLAN identifier; and some of the member information comes from information of the chip at which the packet arrives, for example, a port identifier of the chip at which the packet arrives, and an identifier of the chip at which the packet arrives in the system. If the chip is informed that some member fields do not need to be filled, for example, the ¹³th member CNTag, the member field is filled with a default value such as 0 or another fixed value when the Hash Key is built. If the chip is informed that some member fields need to be filled, but the packet does not include a corresponding field or corresponding member information cannot be extracted, for example, an address resolution protocol (Address Resolution Protocol, ARP) packet does not include a network layer and transmission information, the corresponding field is also filled with a default value such as 0 or another fixed value.

After the hash key is built, the hash key is computed based on a configured hash algorithm, to obtain a corresponding hash value. A hash value building method is usually to configure, in the network device, how to obtain the Hash value from a Hash computing result, for example, extract least significant 16 bits of the Hash computing result as a final Hash value, or most significant 16 bits as a final Hash value, or all bits as a final Hash value.

Further, which fields of the packet are selected to fill for building the hash key is controlled by the hash key member selection control word (Hash key member selection control word). A length of the hash key member selection control word may be 13 bits (bits). If a corresponding bit of the hash key member selection control word is set to 1, it means that a value of a corresponding field in the packet needs to be filled into the Hash key. Otherwise, the value of the corresponding field in the packet is ignored. For example, from a least significant bit to a most significant bit, if a 7^{th} bit of the control word is set to 1, it indicates that a value of a source port (source L4 port) field of the transport layer needs to be extracted from a packet header and filled into a 7^{th} field in a Hash key structure. Otherwise, the 7^{th} field in the Hash key structure is all filled with 0 by default.

Further, in a process of computing the hash value, which hash algorithm is selected is also controlled by a control word. The control word is referred to as a hash function selection control word (Hash function selection control word). The hash function selection control word and the hash key member selection control word may be combined into a single control word. The hash function selection control word and the hash key member selection control word may alternatively exist as two control words that are independent.

The hash algorithm includes cyclic redundancy check (Cyclic Redundancy Check, CRC) computing, exclusive OR computing, or another computing method customized by the chip.

In a possible implementation of the first aspect, that the network device determines an egress port of the packet based on the load balancing identifier of the packet by using the load balancing algorithm corresponding to the packet includes: The network device determines a target logic circuit based on the load balancing identifier of the packet, where the target logic circuit is associated with the load balancing identifier of the packet, and the target logic circuit runs the load balancing algorithm corresponding to the packet; and the network device processes the packet by using the target logic circuit, and determines the egress port of the packet. The load balancing identifier is an implicit identifier.

In a possible implementation of the first aspect, that the network device determines a target logic circuit based on the load balancing identifier of the packet includes: The network device determines the target logic circuit from a plurality of logic circuits included in the network device, where the plurality of logic circuits correspond to a plurality of load balancing identifiers, the plurality of load balancing identifiers include the load balancing identifier of the packet, and the logic circuit runs the load balancing algorithm corresponding to the load balancing identifier.

Specifically, the network device includes the plurality of logic circuits, each logic circuit corresponds to one piece of load balancing configuration information, and the logic circuit runs a load balancing algorithm corresponding to the load balancing configuration information. The network device processes the packet by using the logic circuit, and obtains the egress port of the packet through computing. The load balancing configuration information corresponds to the load balancing identifier (implicit). Therefore, each logic circuit is associated with one implicit load balancing identifier. In this embodiment of this application, each logic circuit is associated with one unique load balancing identifier, and such an implicit load balancing identifier is referred to as a logic circuit identifier in this embodiment of this application. After the network device allocates the implicit load balancing identifier to the packet, the network device determines the target logic circuit based on the load balancing identifier. The target logic circuit is configured to process the packet to obtain the egress port of the packet.

It should be noted that the plurality of logic circuits included in the network device may be physical circuits that are independent of each other, or may be same physical circuits that are distinguished by different time sequences. This is not limited in this embodiment of this application.

In a possible implementation of the first aspect, that the network device processes the packet by using the target logic circuit, and determines the egress port of the packet includes: The network device processes the packet by using the target logic circuit, and determines a target hash function used for the packet and a target hash key composition member of the packet; the network device obtains a target hash value through computing based on the target hash function and the target hash key composition member; and the network device determines the egress port of the packet based on the target hash value.

In a possible implementation of the first aspect, that the network device processes the packet by using the target logic circuit, and determines a target hash function used for the packet and a target hash key composition member of the packet includes:
The network device obtains, from a register associated with the target logic circuit, a hash function selection control word corresponding to the packet and a hash key member selection control word corresponding to the packet; the network device selects a target field from the packet based on the hash key member selection control word corresponding to the packet, where the target field is used to build the target hash key composition member of the packet; and the network device determines, based on the hash function selection control word corresponding to the packet, the target hash function used for the packet.

In a possible implementation of the first aspect, the network device receives a first instruction; and the network device configures the load balancing configuration information based on the first instruction, where the load balancing configuration information indicates an association relationship between the traffic characteristic information and the load balancing algorithm. The first instruction may be sent by a network management device, or the first instruction may be input by a user. This is not limited in this embodiment of this application. According to this solution, the hybrid traffic may be segmented into a plurality of fine-grained sub-traffic topologies, and independent load balancing configuration information is configured for each sub-traffic topology.

In a possible implementation of the first aspect, the load balancing identifier includes any one or more of the following: identification information of the load balancing configuration information, the logic circuit identifier, the hash key member selection control word, or the hash function selection control word. The load balancing configuration information indicates the association relationship between the traffic characteristic information and the load balancing algorithm.

In a possible implementation of the first aspect, the load balancing configuration information includes any one or more of the following information: the identification information of the load balancing configuration information, the load balancing algorithm corresponding to the load balancing configuration information, matching information, where the matching information belongs to the traffic characteristic information, configuration information for hash key composition member selection, or configuration information for hash function selection.

In a possible implementation of the first aspect, the traffic characteristic information of the packet includes one or more of the following: differentiated services code point DSCP information of the packet, priority information of the packet, ingress port information of the packet, virtual local area network VLAN information of the packet, ingress port group information of the packet, egress port information of the packet, egress port group information of the packet, or virtual routing and forwarding VRF table information of the packet.

In a possible implementation of the first aspect, the load balancing algorithm includes the hash function (which is also referred to as a load balancing hash function) and the hash key composition member (which is also referred to as a load balancing hash key composition member).

The load balancing configuration information indicates a specific load balancing algorithm. For example, load balancing configuration information #1 indicates a hash function #1 and a hash key composition member #1. That the user selects the load balancing configuration information #1 means that the user selects the hash function #1 and the hash key composition member #1 to perform load balancing processing on the packet. The load balancing configuration information is considered as an instance of the load balancing algorithm.

In a possible implementation of the first aspect, the network device obtains a second instruction. The second instruction indicates the network device to process the packet by using specific load balancing configuration information. The network device selects the specific load balancing configuration information based on the second instruction to perform load balancing processing on the packet. In a possible implementation of the first aspect, an application scenario of the load balancing algorithm is any one of the following: equal-cost multi-path routing ECMP, weight-cost multi-path routing WCMP, or link aggregation LAG.

In a possible implementation of the first aspect, the packet includes a first packet and a second packet, and traffic characteristic information of the first packet is different from traffic characteristic information of the second packet. That the network device allocates a load balancing identifier of the packet based on traffic characteristic information of the packet includes: The network device allocates a first load balancing identifier of the first packet based on the traffic characteristic information of the first packet, where the first load balancing identifier corresponds to a first load balancing algorithm; and the network device allocates a second load balancing identifier of the second packet based on the traffic characteristic information of the second packet, where the second load balancing identifier corresponds to a second load balancing algorithm. The first load balancing identifier is different from the second load balancing identifier, and the first load balancing algorithm is different from the second load balancing algorithm.

Specifically, the network device is configured with the plurality of pieces of load balancing configuration information, and the plurality of pieces of load balancing configuration information respectively indicate different load balancing algorithms. Each piece of load balancing configuration information corresponds to one unique load balancing identifier, and each piece of load balancing configuration information corresponds to one type of packet. After the first packet arrives at the network device, the network device extracts the traffic characteristic information of the first packet. Then, the network device allocates the first load balancing identifier of the first packet based on the traffic characteristic information of the first packet. The first load balancing identifier corresponds to the first load balancing algorithm, and the network device performs load balancing processing on the first packet by using the first load balancing algorithm. After the second packet arrives at the network device, the network device extracts the traffic characteristic information of the second packet. Then, the second load balancing identifier of the second packet is allocated based on the traffic characteristic information of the second packet. The second load balancing identifier corresponds to the second load balancing algorithm, and the network device performs load balancing processing on the second packet by using the second load balancing algorithm. The first load balancing identifier is different from the second load balancing identifier, and the first load balancing algorithm is different from the second load balancing algorithm.

According to a second aspect, an embodiment of this application provides a communication apparatus, used in a network device and including:
a transceiver module at which a packet arrives; and
a processing module, configured to allocate a load balancing identifier of the packet based on traffic characteristic information of the packet, where the load balancing identifier indicates a load balancing algorithm corresponding to the packet.

The processing module is further configured to determine an egress port of the packet based on the load balancing identifier of the packet by using the load balancing algorithm corresponding to the packet. The egress port of the packet is used to forward the packet.

In a possible implementation, the processing module is further configured to fill the load balancing identifier into a packet descriptor of the packet. The packet descriptor is used to record packet header information of the packet.

In a possible implementation, the processing module is further configured to determine, based on the load balancing identifier, the load balancing algorithm corresponding to the packet.

The processing module is further configured to determine, based on the load balancing algorithm corresponding to the packet, a target hash function used for the packet and a target hash key composition member of the packet.

The processing module is further configured to obtain a target hash value through computing based on the target hash function and the target hash key composition member.

The processing module is further configured to determine the egress port of the packet based on the target hash value.

In a possible implementation, the processing module is further configured to determine, based on the load balancing identifier, a hash function selection control word corresponding to the packet and a hash key member selection control word corresponding to the packet.

The processing module is further configured to determine, based on the hash function selection control word corresponding to the packet, the target hash function used for the packet.

The processing module is further configured to select a target field from the packet based on the hash key member selection control word corresponding to the packet. The target field is used to build the target hash key composition member of the packet.

In a possible implementation, the processing module is further configured to determine a target logic circuit based on the load balancing identifier of the packet. The target logic circuit is associated with the load balancing identifier of the packet, and the target logic circuit runs the load balancing algorithm corresponding to the packet.

The processing module is further configured to process the packet by using the target logic circuit, and determine the egress port of the packet.

In a possible implementation, the processing module is further configured to determine the target logic circuit from a plurality of logic circuits included in the network device. The plurality of logic circuits correspond to a plurality of load balancing identifiers, the plurality of load balancing identifiers include the load balancing identifier of the packet, and the logic circuit runs the load balancing algorithm corresponding to the load balancing identifier.

In a possible implementation, the processing module is further configured to process the packet by using the target logic circuit, and determine a target hash function used for the packet and a target hash key composition member of the packet.

The processing module is further configured to obtain a target hash value through computing based on the target hash function and the target hash key composition member.

The processing module is further configured to determine the egress port of the packet based on the target hash value.

In a possible implementation, the transceiver module is further configured to obtain, from a register associated with the target logic circuit, a hash function selection control word corresponding to the packet and a hash key member selection control word corresponding to the packet.

The processing module is further configured to select a target field from the packet based on the hash key member selection control word corresponding to the packet. The target field is used to build the target hash key composition member of the packet.

The processing module is further configured to determine, based on the hash function selection control word corresponding to the packet, the target hash function used for the packet.

In a possible implementation, the transceiver module is further configured to receive a first instruction.

The processing module is further used to configure load balancing configuration information based on the first instruction. The load balancing configuration information indicates an association relationship between the traffic characteristic information and the load balancing algorithm.

In a possible implementation, the load balancing identifier includes any one or more of the following:
identification information of the load balancing configuration information, a logic circuit identifier, a hash key member selection control word, or a hash function selection control word.

The load balancing configuration information indicates the association relationship between the traffic characteristic information and the load balancing algorithm.

In a possible implementation, the load balancing configuration information includes any one or more of the following information:
the identification information of the load balancing configuration information;
the load balancing algorithm corresponding to the load balancing configuration information;
matching information, where the matching information belongs to the traffic characteristic information;
configuration information for hash key composition member selection; or
configuration information for hash function selection.

In a possible implementation, the traffic characteristic information of the packet includes one or more of the following:
differentiated services code point DSCP information of the packet, priority information of the packet, ingress port information of the packet, virtual local area network VLAN information of the packet, ingress port group information of the packet, egress port information of the packet, egress port group information of the packet, or virtual routing and forwarding VRF table information of the packet.

In a possible implementation, equal-cost multi-path routing ECMP, weight-cost multi-path routing WCMP, or link aggregation LAG.

In a possible implementation, the packet includes a first packet and a second packet, and traffic characteristic information of the first packet is different from traffic characteristic information of the second packet.

The processing module is specifically configured to allocate a first load balancing identifier of the first packet based on the traffic characteristic information of the first packet. The first load balancing identifier corresponds to a first load balancing algorithm.

The processing module is specifically configured to allocate a second load balancing identifier of the second packet based on the traffic characteristic information of the second packet. The second load balancing identifier corresponds to a second load balancing algorithm.

The first load balancing identifier is different from the second load balancing identifier, and the first load balancing algorithm is different from the second load balancing algorithm.

According to a third aspect, an embodiment of this application provides a communication apparatus, including a communication interface and
a processor, connected to the communication interface.

The communication interface is configured to obtain a packet.

The processor is configured to allocate a load balancing identifier of the packet based on traffic characteristic information of the packet. The load balancing identifier indicates a load balancing algorithm corresponding to the packet.

The processor is further configured to determine an egress port of the packet based on the load balancing identifier of the packet by using the load balancing algorithm corresponding to the packet. The egress port of the packet is used to forward the packet.

In a possible implementation, the processor is further configured to fill the load balancing identifier into a packet descriptor of the packet. The packet descriptor is used to record packet header information of the packet.

In a possible implementation, the processor is further configured to determine, based on the load balancing identifier, the load balancing algorithm corresponding to the packet.

The processor is further configured to determine, based on the load balancing algorithm corresponding to the packet, a target hash function used for the packet and a target hash key composition member of the packet.

The processor is further configured to obtain a target hash value through computing based on the target hash function and the target hash key composition member.

The processor is further configured to determine the egress port of the packet based on the target hash value.

In a possible implementation, the processor is further configured to determine, based on the load balancing identifier, a hash function selection control word corresponding to the packet and a hash key member selection control word corresponding to the packet.

The processor is further configured to determine, based on the hash function selection control word corresponding to the packet, the target hash function used for the packet.

The processor is further configured to select a target field from the packet based on the hash key member selection control word corresponding to the packet. The target field is used to build the target hash key composition member of the packet.

In a possible implementation, the processor is further configured to determine a target logic circuit based on the load balancing identifier of the packet. The target logic circuit is associated with the load balancing identifier of the packet, and the target logic circuit runs the load balancing algorithm corresponding to the packet.

The processor is further configured to process the packet by using the target logic circuit, and determine the egress port of the packet.

In a possible implementation, the processor is further configured to determine the target logic circuit from a plurality of logic circuits included in the network device. The plurality of logic circuits correspond to a plurality of load balancing identifiers, the plurality of load balancing identifiers include the load balancing identifier of the packet, and the logic circuit runs the load balancing algorithm corresponding to the load balancing identifier.

In a possible implementation, the processor is further configured to process the packet by using the target logic circuit, and determine a target hash function used for the packet and a target hash key composition member of the packet.

The processor is further configured to obtain a target hash value through computing based on the target hash function and the target hash key composition member.

The processor is further configured to determine the egress port of the packet based on the target hash value.

In a possible implementation, the communication interface is further configured to obtain, from a register associated with the target logic circuit, a hash function selection control word corresponding to the packet and a hash key member selection control word corresponding to the packet.

The processor is further configured to select a target field from the packet based on the hash key member selection control word corresponding to the packet. The target field is used to build the target hash key composition member of the packet.

The processor is further configured to determine, based on the hash function selection control word corresponding to the packet, the target hash function used for the packet.

In a possible implementation, the communication interface is further configured to receive a first instruction.

The processor is further used to configure load balancing configuration information based on the first instruction. The load balancing configuration information indicates an association relationship between the traffic characteristic information and the load balancing algorithm.

In a possible implementation, the load balancing identifier includes any one or more of the following:
identification information of the load balancing configuration information, a logic circuit identifier, a hash key member selection control word, or a hash function selection control word.

The load balancing configuration information indicates the association relationship between the traffic characteristic information and the load balancing algorithm.

In a possible implementation, the load balancing configuration information includes any one or more of the following information:
the identification information of the load balancing configuration information;
the load balancing algorithm corresponding to the load balancing configuration information;
matching information, where the matching information belongs to the traffic characteristic information;
configuration information for hash key composition member selection; or
configuration information for hash function selection.

In a possible implementation, the traffic characteristic information of the packet includes one or more of the following:
differentiated services code point DSCP information of the packet, priority information of the packet, ingress port information of the packet, virtual local area network VLAN information of the packet, ingress port group information of the packet, egress port information of the packet, egress port group information of the packet, or virtual routing and forwarding VRF table information of the packet.

In a possible implementation, equal-cost multi-path routing ECMP, weight-cost multi-path routing WCMP, or link aggregation LAG.

In a possible implementation, the packet includes a first packet and a second packet, and traffic characteristic information of the first packet is different from traffic characteristic information of the second packet.

The processor is specifically configured to allocate a first load balancing identifier of the first packet based on the traffic characteristic information of the first packet. The first load balancing identifier corresponds to a first load balancing algorithm.

The processor is specifically configured to allocate a second load balancing identifier of the second packet based on the traffic characteristic information of the second packet. The second load balancing identifier corresponds to a second load balancing algorithm.

The first load balancing identifier is different from the second load balancing identifier, and the first load balancing algorithm is different from the second load balancing algorithm.

According to a fourth aspect, a communication system is provided. The communication system includes the communication apparatus according to the second aspect or the third aspect.

A fifth aspect of this application provides a computer storage medium. The computer storage medium may be non-volatile. The computer storage medium stores computer-readable instructions. When the computer-readable instructions are executed by a processor, the method according to any one of the first aspect or the implementations of the first aspect is implemented.

A sixth aspect of this application provides a computer program product including instructions. When the computer program product runs on a computer, the computer is enabled to perform the method according to any one of the first aspect or the implementations of the first aspect.

A seventh aspect of this application provides a chip system. The chip system includes a processor and an interface circuit, and is configured to support a network device in implementing functions in the foregoing aspects, for example, sending or processing data and/or information in the foregoing method. In a possible design, the chip system further includes a memory. The memory is configured to store program instructions and data that are necessary for the network device. The chip system may include a chip, or may include a chip and another discrete device.

An eighth aspect of this application provides a communication apparatus, including a communication interface and
a processor, connected to the communication interface, where based on the communication interface and the processor, the communication apparatus is enabled to perform the method in the first aspect.

### BRIEF DESCRIPTION OF DRAWINGS

FIG. 1 is a diagram of small-scale networking;
FIG. 2 is a diagram of large-scale networking;
FIG. 3 is a diagram of a structure of a single control word;
FIG. 4 is a diagram of CRC computing;
FIG. 5 is a diagram of independent networking of a computing network and a storage network;
FIG. 6 is a diagram of joint networking of a computing network and a storage network;
FIG. 7 is a diagram of an embodiment of a packet processing method according to an embodiment of this application;
FIG. 8 is a diagram of load balancing configuration information according to an embodiment of this application;
FIG. 9 is a diagram of a packet descriptor according to an embodiment of this application;
FIG. 10 is a schematic flowchart of an application scenario according to an embodiment of this application;
FIG. 11 is a schematic flowchart of load balancing processing according to an embodiment of this application;
FIG. 12 is a diagram of a structure of a communication apparatus 1200 according to an embodiment of this application;
FIG. 13 is a diagram of a structure of a communication apparatus 1300 according to an embodiment of this application; and
FIG. 14 is a diagram of a structure of a communication apparatus 1400 according to an embodiment of this application.

### DESCRIPTION OF EMBODIMENTS

The following describes some example implementations of the present disclosure in more detail with reference to the accompanying drawings. Although some example implementations of the present disclosure are shown in the accompanying drawings, it should be understood that the present disclosure may be implemented in various forms and should not be limited by the example implementations described herein. On the contrary, these implementations are provided to make the present disclosure more thorough and complete and to fully convey the scope of the present disclosure to a person skilled in the art.

In the specification, claims, and accompanying drawings of this application, the terms "first", "second", and the like are intended to distinguish between similar objects but do not necessarily indicate a specific order or sequence. It should be understood that the data used in such a way may be interchangeable in proper circumstances, so that the embodiments described herein can be implemented in orders other than the order illustrated or described herein. Moreover, the terms "include", "contain", and any other variants mean to cover a non-exclusive inclusion, for example, a process, method, system, product, or device that includes a list of steps or modules is not necessarily limited to those listed steps or modules, but may include other steps or modules not expressly listed or inherent to such a process, method, product, or device. Division into the modules in this application is logical division and may be other division during actual implementation. For example, a plurality of modules may be combined or integrated into another system, or some features may be ignored or not performed.

First, some concepts in embodiments of this application are described.

### 1. Multi-stage switching network (Clos (CLOS) network)

The CLOS network includes spine (Spine) nodes, leaf (leaf) nodes, and top-of-rack (Top-of-Rack, ToR) nodes. A server accesses a network by connecting ToR nodes, the ToR nodes are connected to each leaf node, and each leaf node is connected to each spine node; and vice versa.

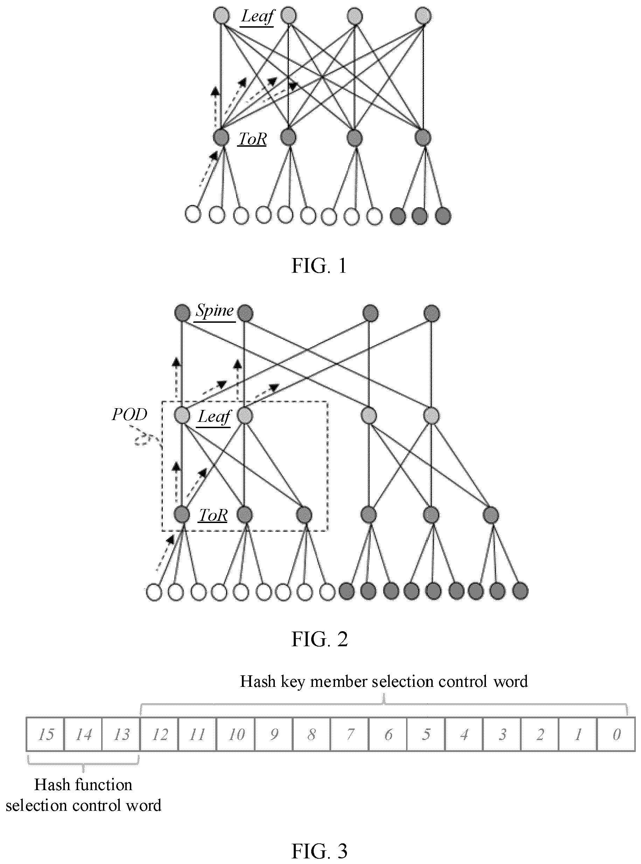

FIG. 1 is a diagram of small-scale networking. In a 2-stage CLOS network, there is usually only one time of traffic load balancing, which occurs in a forwarding direction from a TOR switch to a Leaf switch. Each 2-stage CLOS network is referred to as a pod (POD).

FIG. 2 is a diagram of large-scale networking. In a 3-stage CLOS network, there are usually two times of traffic load balancing. One time of traffic load balancing occurs in a forwarding direction from a TOR switch to a Leaf switch within a POD, and the other time of traffic load balancing occurs in a forwarding direction from a Leaf switch to a Spine switch upon exiting the POD. Load balancing is to evenly forward traffic over a plurality of links. Load balancing is usually referred to as load balancing or load sharing.

### 2. Load balancing

2.1. For implementing load balancing, in a network that uses a layer 3 (Layer 3, L3) identifier, namely, a network layer identifier, for table lookup and forwarding, for example, in an internet protocol (Internet protocol, IP) network, equal-cost multi-path routing (Equal-Cost Multi-Path, ECMP) is usually used as a traffic load balancing technology. Specifically, an ECMP processing procedure is as follows.

S1: Query a network layer routing table based on a network layer identifier (namely, a destination IP address (destination IP, DIP)) extracted from a packet, and find a corresponding entry in the network layer routing. If an ECMP identifier of the corresponding entry is 1, it indicates that there are a plurality of equal-cost next hops to the destination address. Then, jump to a corresponding ECMP Group table.

S2: Extract a field (field) from information of the packet to build a hash key (Hash Key), and send the hash key to a Hash computing engine for Hash computing.

S3: Perform a modulo operation on a quantity of members in an ECMP group (Group) with a hash (Hash) value generated through computing.

S4: Sum up the obtained hash value and a base pointer of the ECMP Group table, and obtain a location (a member link), in an ECMP member table, of information about a next hop of a selected ECMP member link.

S5: Forward the packet over a physical interface corresponding to the member link selected in step S4.

2.2. For implementing load balancing, in a network that uses a layer 2 (Layer 2, L2) identifier, namely, a link layer identifier, for table lookup and forwarding, for example, in an Ethernet switching network, link aggregation (Link Aggregation, LAG) is mainly used as a traffic load balancing technology. LAG is also referred to as a Trunk. Specifically, a LAG processing procedure is as follows.

D1: Query a MAC table based on a link layer identifier (namely, a destination MAC address (destination MAC)) extracted from a packet, and find a corresponding entry in the MAC table. If an identifier of the corresponding entry is LAG, it indicates that there are a plurality of parallel ports to the destination MAC address. Then, jump to a corresponding Trunk Group table.

D2: Extract a field (field) from information of the packet to build a Hash Key, and send the hash key to a Hash computing engine for Hash computing.

D3: Perform a modulo operation on a quantity of members in a Trunk Group with a Hash value generated through computing.

D4: Sum up the obtained value and a base pointer of the Trunk Group table, and obtain a location (a member link), in a Trunk member table, of a port of a selected Trunk member link

D5: Forward the packet over the member link selected in step D4.

### 3. Building the hash key (hash key) and computing the hash value

The following describes how to build the hash key. An example in which a network device responsible for building the hash key is a chip is used for description.

In an example, the hash key has 13 members in total, and each member is 16 bits wide, namely, 2 bytes wide. A 1^{st} member is a source virtual port identifier of a virtual network tag (Virtual Network Tag, VNTag). A 2^{nd} member is a destination virtual port identifier of the VNTag. A 3^{rd} member is an identifier of the chip in a system. A 4^{th} member is an identifier of a physical interface of the chip at which the packet arrives. A 5^{th} member is a network layer protocol identifier of the packet. A 6^{th} member is a destination port of a transport layer of the packet. A 7^{th} member is a source port of the transport layer of the packet. An 8^{th} member is a VLAN identifier of the packet. A 9^{th} member is least significant 16 bits of a network layer destination address of the packet. A 10^{th} member is most significant 16 bits of the network layer destination address of the packet. An 11^{th} member is least significant 16 bits of a network layer source address of the packet. A 12^{th} member is most significant 16 bits of the network layer source address of the packet. A member is a congestion notification tag (Congestion Notification tag, CNTag).

Some of the member information comes from fields carried in the packet, for example, the network layer destination address, the network layer source address, the destination port of the transport layer, the source port of the transport layer, the network layer protocol identifier, the CNTag, the VNTag, and the VLAN identifier; and some of the member information comes from information of the chip at which the packet arrives, for example, a port identifier of the chip at which the packet arrives, and an identifier of the chip at which the packet arrives in the system. If the chip is informed that some member fields do not need to be filled, for example, the ¹³th member CNTag, the member field is filled with a default value such as 0 or another fixed value when the Hash Key is built. If the chip is informed that some member fields need to be filled, but the packet does not include a corresponding field or corresponding member information cannot be extracted, for example, an address resolution protocol (Address Resolution Protocol, ARP) packet does not include a network layer and transmission information, the corresponding field is also filled with a default value such as 0 or another fixed value.

After the hash key is built, the hash key is computed based on a configured hash algorithm, to obtain a corresponding hash value. A hash value building method is usually to configure, in the network device, how to obtain the Hash value from a Hash computing result, for example, extract least significant 16 bits of the Hash computing result as a final Hash value, or most significant 16 bits as a final Hash value, or all bits as a final Hash value.

Further, which fields of the packet are selected to fill for building the hash key is controlled by a hash key member selection control word (Hash key member selection control word). A length of the hash key member selection control word may be 13 bits (bits). If a corresponding bit of the hash key member selection control word is set to 1, it means that a value of a corresponding field in the packet needs to be filled into the Hash key. Otherwise, the value of the corresponding field in the packet is ignored. For example, from a least significant bit to a most significant bit, if a 7^{th} bit of the control word is set to 1, it indicates that a value of a source port (source L4 port) field of the transport layer needs to be extracted from a packet header and filled into a 7^{th} field in a Hash key structure. Otherwise, the 7^{th} field in the Hash key structure is all filled with 0 by default.

Further, in a process of computing the hash value, which hash algorithm is selected is also controlled by a control word. The control word is referred to as a hash function selection control word (Hash function selection control word). The hash function selection control word and the hash key member selection control word may be combined into a single control word. For example, FIG. 3 is a diagram of a structure of a single control word. A length of the single control word may be 16 bits. Bits 0 to 12 are used as the hash key member selection control word, and bits 13 to 15 are used as the hash function selection control word. The hash function selection control word and the hash key member selection control word may alternatively exist as two control words that are independent.

The hash algorithm includes cyclic redundancy check (Cyclic Redundancy Check, CRC) computing, exclusive OR computing, or another computing method customized by the chip.

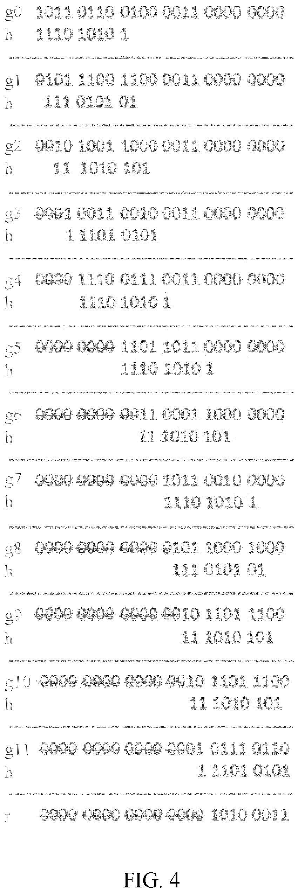

For ease of understanding, refer to FIG. 4. FIG. 4 is a diagram of CRC computing. CRC computing is essentially to perform iterative exclusive OR and reminder operations on input bit strings, for example, the Key herein. The following uses an example to describe CRC computing. As shown in FIG. 4, it is assumed that the Hash Key is 16-bit binary information g=1011 0110 0100 0011, and this string binary code may be represented as an algebraic polynomial g(x)=x15+x13+x12+x10+x9+x6+x1+1, where a value of a k^{th} bit in g corresponds to a coefficient of xk in g(x), and k is a positive integer. Multiply g(x) by xm, that is, add m 0s after g, and then divide an obtained value by an m-order polynomial h(x) to obtain an (m-1)-order remainder r(x). A binary code r corresponding to the remainder r(x) is a CRC computing result.

It can be learned with reference to FIG. 4 that a CRC computing method is determined, and what changes is the Key used as an input of a dividend and the m-order polynomial h(x) used as a divisor, where h(x) is also usually referred to as a generator polynomial. Usually, the generator polynomial is used for identifying and distinguishing between different CRC algorithms. For example, "a CRC algorithm A" actually means that "the generator polynomial used by the CRC algorithm is A" or "a name identifier of the generator polynomial used by the CRC algorithm is A", for example, "CRC-16-CCITT" or "CRC 0x1021". "CRC-16-CCITT" herein is an agreed CRC name, and 0x1021 is the generator polynomial. The network device or another CRC algorithm implementation entity (for example, the chip) may also name CRC for identification and distinguishing. The CRC generator polynomial used for Hash computing of ECMP is related to implementation of the chip.

### 4. Independent networking and joint networking

A computing network (compute network) and a storage network (storage network) are used as examples to describe independent networking and joint networking.

### 4.1. Independent networking

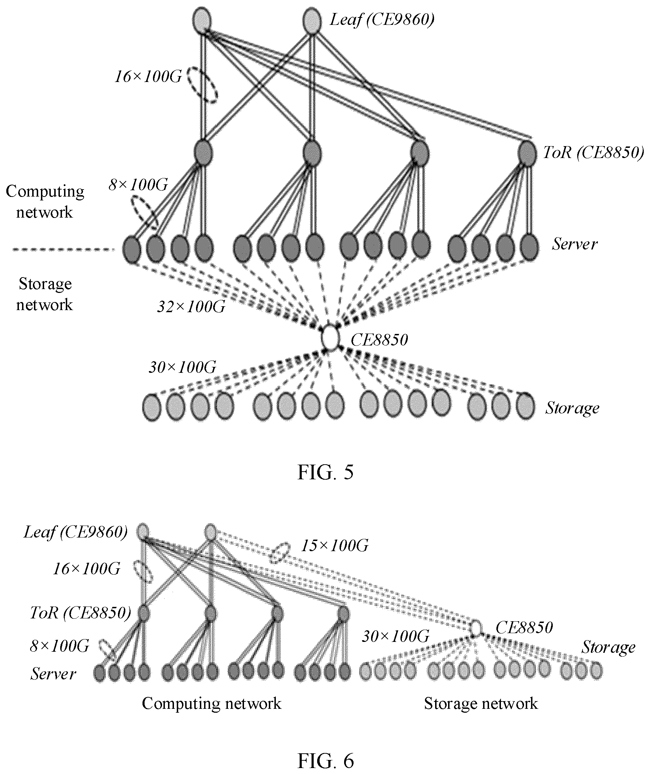

A service traffic model of the computing network uses "Halving-doubling" as an example. This model is a multi-point-to-point sparse traffic model. A storage service traffic model of the storage network uses a writing operation of a storage service as an example. This model is a multi-point-to-multi-point dense traffic model. For example, FIG. 5 is a diagram of independent networking of the computing network and the storage network.

When the computing network and storage network are deployed independently, computing traffic and storage traffic cannot coexist in a same network. The two networks may select a network load balancing configuration with best performance based on the service traffic models carried by the two networks. For example, the computing network uses a case #1 as a network load balancing configuration, and the storage network uses a case #2 as a network load balancing configuration.

That the computing network and the storage network are independently deployed is at costs of high investment. The computing network and the storage network need to be deployed on different servers, and the different servers access two different networks through at least two independent gateways. Therefore, independent networking requires high costs.

### 4.2. Joint networking

Independent networking requires high costs. Therefore, joint networking may be used to reduce the costs. Specifically, in a converged network (namely, a network in joint networking), the computing network and the storage network access a same network through a same gateway and a same link. For example, FIG. 6 is a diagram of joint networking of the computing network and the storage network.

However, joint networking brings a new problem. Neither the case #1 nor the case #2 can minimize a load deviation rate of each link at the same time for computing service traffic (computing network) and storage traffic (storage network). That is, the computing network and the storage network cannot be optimized at the same time. As a result, the load deviation rate of each link on the entire network is high, and a throughput of the entire network decreases.

In view of this, an embodiment of this application provides a packet processing method. The method includes: After a packet arrives at a network device, the network device allocates a load balancing identifier of the packet based on traffic characteristic information of the packet, where the load balancing identifier indicates a load balancing algorithm corresponding to the packet; and the network device determines an egress port of the packet based on the load balancing identifier of the packet by using the load balancing algorithm corresponding to the packet, where the egress port of the packet is used to forward the packet. The network device can allocate different load balancing identifiers to different packets. Then, the network device determines the egress port of the packet based on the load balancing identifier by using the corresponding load balancing algorithm, to implement load balancing processing on the packet. In a scenario in which a plurality of services coexist in a network, the network device may perform corresponding load balancing processing on packets of different services, to improve a throughput of the entire network.

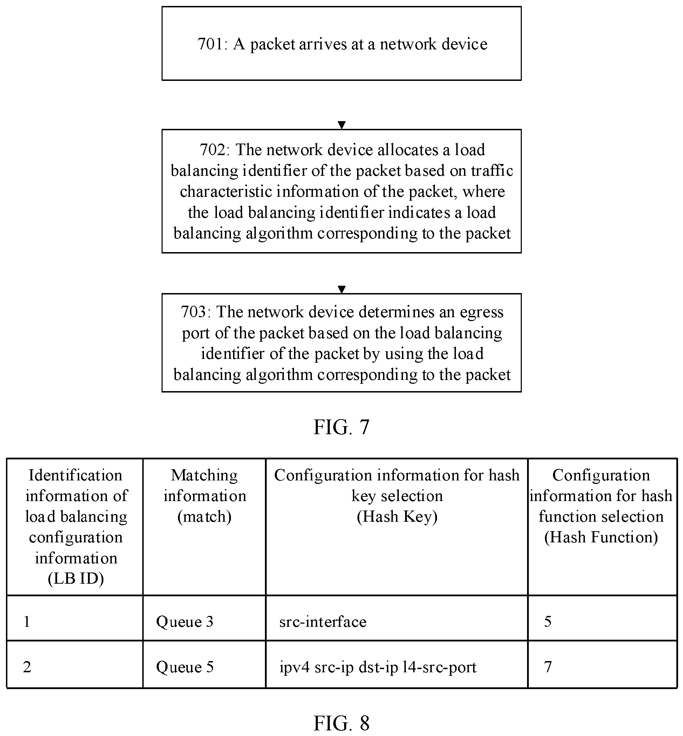

The following describes embodiments of this application with reference to the accompanying drawings. FIG. 7 is a diagram of an embodiment of a packet processing method according to an embodiment of this application. This embodiment of this application provides a packet processing method. The method includes the following steps.

701: A packet arrives at a network device.

In this embodiment, that a packet arrives at a network device includes: The network device receives the packet, or the network device actively obtains the packet. A packet header of the packet includes a plurality of types of information, for example, an L2 packet header (L2 header), an L3 packet header (L3 header), transport layer header information, Ethernet layer information, IP header information, transmission control protocol (Transmission Control Protocol, TCP)/user datagram protocol (User Datagram Protocol, UDP) header information, and the like.

Further, after the packet arrives at the network device, the network device records information of a physical interface at which the packet arrives, that is, records ingress port information of the packet.

702: The network device allocates a load balancing identifier of the packet based on traffic characteristic information of the packet, where the load balancing identifier indicates a load balancing algorithm corresponding to the packet.

In this embodiment, after the packet arrives at the network device, the packet is processed to obtain the traffic characteristic information of the packet. The traffic characteristic information of the packet in this embodiment of this application includes but is not limited to: differentiated services code point DSCP information of the packet, priority information of the packet, the ingress port information of the packet, virtual local area network VLAN information of the packet, ingress port group information of the packet, egress port information of the packet, egress port group information of the packet, or virtual routing and forwarding VRF table information of the packet.

Specifically, extracting the traffic characteristic information of the packet includes the following: The network device extracts a source media access control (Media Access Control, MAC) address, a destination MAC address, an Ethernet type, a virtual local area network (Virtual Local Area Network, VLAN) identifier, and the like from the L2 packet header. The network device extracts a source IP address, a destination IP address, a differentiated services code point (Differentiated Services Code Point, DSCP) value, a time to live (Time To Live, TTL) value, an IP protocol type value, and the like from the L3 packet header. The network device extracts a source port value of a transport layer, a destination port value of the transport layer, and the like from an L4 packet header. The network device extracts, from metadata (metadata) of the packet, an identifier of a physical interface at which the packet arrives (source interface id), an identifier of a module in which the physical interface at which the packet arrives is located (source module id), an identifier of a physical interface at which the packet is to be sent (destination interface id), and the like.

The network device maintains a plurality of pieces of load balancing configuration information, and the load balancing configuration information indicates an association relationship between the load balancing algorithm and the traffic characteristic information. The load balancing configuration information indicates a specific load balancing algorithm. For example, load balancing configuration information #1 indicates a hash function #1 and a hash key composition member #1. That a user selects the load balancing configuration information #1 means that the user selects the hash function #1 and the hash key composition member #1 to perform load balancing processing on the packet. The load balancing configuration information is considered as an instance of the load balancing algorithm. In this embodiment of this application, the load balancing algorithm includes a hash function (which is also referred to as a load balancing hash function) and a hash key composition member (which is also referred to as a load balancing hash key composition member).

Specifically, the load balancing configuration information includes one or more of the following information: identification information of the load balancing configuration information, matching information, configuration information for hash key composition member selection, or configuration information for hash function selection. The matching information may be the traffic characteristic information of the packet, for example, related information recorded in a packet identifier. The configuration information for hash key composition member selection may be a hash key member selection control word. The configuration information for hash function selection may be a hash function selection control word.

In a possible implementation, the network device receives a first instruction, and configures the load balancing configuration information based on the first instruction. The first instruction may be sent by a network management device, or the first instruction may be input by the user. This is not limited in this embodiment of this application.

In a possible implementation, the network device obtains a second instruction. The second instruction indicates the network device to process the packet by using specific load balancing configuration information. The network device selects the specific load balancing configuration information based on the second instruction to perform load balancing processing on the packet.

For example, FIG. 8 is a diagram of load balancing configuration information according to an embodiment of this application. Load balancing configuration information #1 includes the following: identification information of the load balancing configuration information is "1"; matching information is "Queue 3", indicating that the load balancing configuration information #1 matches traffic of Queue 3; configuration information for hash key composition member selection is a source physical interface number "src-interface", indicating that a hash key uses the source physical interface; and configuration information for hash function selection is "Hashmode 5", indicating that a used hash function (or a hash algorithm) is Hashmode 5. Load balancing configuration information #2 includes the following: identification information of the load balancing configuration information is "2"; matching information is "Queue5", indicating that the load balancing configuration information #2 matches traffic of Queue 5; configuration information for hash key composition member selection is a source IP address and a destination IP address "a source IP address (src-ip), a destination IP address (dst-ip), and a transport layer source port (l4-src-port)", indicating that a hash key uses the source IP address (src-ip), the destination IP address (dst-ip), and the transport layer source port (l4-src-port); and configuration information for hash function selection is "Hashmode 7", indicating that a used hash function (or a hash algorithm) is Hashmode 7.

In another example, Table 1 shows configured load balancing configuration information.

**Table 1**

| Identification information of load balancing configuration information | Matching information (match) | Name of a configuration file of the load balancing configuration information | Hash key (hash key) | Hash function (hash function) |
|---|---|---|---|---|
| 1 | Queue3 | Artificial | Source physical | 5 |
| | | intelligence traffic (AI_traffic) | interface number "src-interface" | |
| 2 | | Storage traffic (storage_traffic) | Source IP address (src-ip), destination IP address (dst-ip), and transport layer source port (l4-src-port) | 7 |

With reference to Table 1, the network device may configure the load balancing configuration information in Table 1 above. A possible configuration model is as follows: "load-balance profile storage_traffic

```
                ipv4 src-ip dst-ip l4-src-port
                hashmode 7
          load-balance profile AI_traffic
                src_interface
                hashmode 5
          #
          interface 100GE1/2/2
                undo portswitch
                ip address 192.11.21.11 255.255.255.0
                trust dscp
                inbound load-balance ecmp qos queue 3 profile AI_traffic
          interface 100GE1/2/3
                undo portswitch
                ip address 192.11.22.11 255.255.255.0
                trust dscp
                outbound load-balance ecmp qos queue 5 profile Storage_traffic
          #"
```

For example, in a physical interface 100GE 1/2/2, a configuration command "load-balance ecmp qos queue 3 profile AI_traffic" is added. In this configuration command, a 1^{st} keyword "load-balance" indicates a mapping command for network load balancing. A 2^{nd} keyword "ecmp" indicates multi-path decision applicable to layer 3 forwarding, namely, equal-cost multi-path. A 3^{rd} keyword group "qos queue 3" indicates a queue number of a matching traffic characteristic, which is usually a DSCP value. A 4^{th} keyword group "profile AI_traffic" indicates that a network load balancing configuration corresponding to traffic whose DSCP value is 3 is a configuration file (load-balance profile) of a load balancing configuration named AI_traffic. In the configuration "AI_traffic", the Hash key is built based on a number of the source physical interface at which the packet arrives, and the Hash algorithm uses hashmode 5.

In this embodiment of this application, an algorithm for computing the egress port of the packet is referred to as a load balancing algorithm. The load balancing algorithm includes but is not limited to: equal-cost multi-path routing ECMP, weight-cost multi-path routing WCMP, link aggregation LAG, or the like.

After the packet arrives at traffic characteristic information of the network device, the network device classifies the packet for processing based on the traffic characteristic information of the packet. In other words, the network device matches the traffic characteristic information of the packet with the matching information in the load balancing configuration information. If the matching succeeds, it is considered that a classification result of the packet corresponds to the load balancing configuration information, and the packet needs to be processed based on an indication of the load balancing configuration information. Then, the network device allocates the load balancing identifier to the packet based on the classification result. The load balancing identifier uniquely indicates the load balancing configuration information (namely, the load balancing configuration information that matches the traffic characteristic information of the packet).

For details about allocating the load balancing identifier of the packet, this embodiment of this application provides two optional implementations. Details are as follows.
A. The load balancing identifier is an explicit identifier.
B. The load balancing identifier is an implicit identifier.

The following provides specific descriptions. A. The load balancing identifier is an explicit identifier.

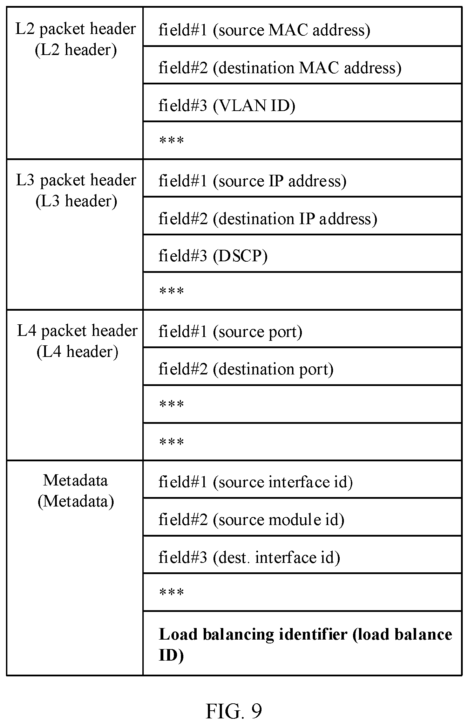

In a possible implementation, the network device fills the load balancing identifier into a packet descriptor of the packet. The packet descriptor is used to record packet header information of the packet. The packet descriptor is used to record the packet header information. The information recorded by the packet descriptor includes but is not limited to: Ethernet header information, IP header information, TCP/UDP header information, location information of the packet stored in a chip buffer (buffer), length information of the packet, the egress port information of the packet, and the like. The Ethernet header information, the IP header information, and the TCP/UDP header information are used for providing an information input for table lookup-based forwarding and access control list (Access Control List, ACL). The information is written into the packet descriptor when a MAC processing module of the network device processes the packet. Information such as the location information of the packet stored in the chip buffer, the length information, and the egress port information of the packet is written when the network device processes a forwarding decision of the packet. For example, a length of the packet descriptor is 64 bytes. The length of the packet descriptor is usually less than an average length of the packet. Therefore, the network device obtains related information of the packet by reading the packet descriptor when a less bandwidth is used. For example, the packet descriptor obtained after the load balancing identifier is filled is shown in FIG. 9. FIG. 9 is a diagram of a packet descriptor according to an embodiment of this application. The load balancing identifier may be filled into a metadata (metadata) part of the packet descriptor.

Specifically, after the packet arrives at the network device, the network device uses the related information recorded in the packet descriptor of the packet as the traffic characteristic information of the packet. Then, the network device selects, from matching information of the plurality of pieces of load balancing configuration information, matching information that matches the packet descriptor (traffic characteristic information). The network device allocates the load balancing identifier corresponding to the load balancing configuration information to the packet. The network device fills the load balancing identifier into the packet descriptor of the packet.

In another possible implementation, the network device fills the load balancing identifier into a reserved field of the packet.

In another possible implementation, the network device fills the load balancing identifier into a payload (payload) of the packet. It may be understood that a region in which the load balancing identifier is filled is not limited in this embodiment of this application.

The load balancing identifier indicates the load balancing configuration information used for processing the packet. The network device determines, based on the load balancing identifier, how to process the packet and obtain the egress port of the packet, to implement load balancing on the packet.

In a possible implementation, the load balancing identifier is the identification information of the load balancing configuration information. For example, as shown in FIG. 8, a load balancing identifier corresponding to the load balancing configuration information #1 is "1", and a load balancing identifier corresponding to the load balancing configuration information #2 is "2". The network device may find, based on the load balancing identifier, corresponding load balancing configuration information. Further, the network device determines, from the load balancing configuration information, an application scenario of the load balancing algorithm used for processing the packet: the hash key member selection control word (Hash key member selection control word) and the hash function selection control word (Hash function selection control word) that are used for processing the packet. In other words, the network device maintains a mapping relationship between the load balancing identifier and the load balancing configuration information, and the network device determines, based on the load balancing identifier, the load balancing configuration information used for processing the packet. Then, based on an indication of the load balancing configuration information, the packet is processed and the egress port of the packet is determined.

In another possible implementation, the load balancing identifier includes the hash key member selection control word and the hash function selection control word. In other words, the load balancing identifier directly indicates the hash key member selection control word and the hash function selection control word. For example, the load balancing identifier is shown in FIG. 3.

B. The load balancing identifier is an implicit identifier.

In this embodiment of this application, when the load balancing identifier is an implicit identifier, the load balancing identifier may also be referred to as a logic circuit identifier.

In a possible implementation, after the network device receives the packet, the network device allocates an implicit load balancing identifier to the packet based on the traffic characteristic information of the packet. Then, a logic circuit for processing the packet is determined based on the implicit load balancing identifier. The logic circuit runs a load balancing algorithm corresponding to the load balancing identifier, and the egress port of the packet is obtained through computing by using the logic circuit.

Specifically, the network device includes a plurality of logic circuits, each logic circuit corresponds to one piece of load balancing configuration information, and the logic circuit runs a load balancing algorithm corresponding to the load balancing configuration information. The network device processes the packet by using the logic circuit, and obtains the egress port of the packet through computing. The load balancing configuration information corresponds to the load balancing identifier (implicit). Therefore, each logic circuit is associated with one implicit load balancing identifier. In this embodiment of this application, each logic circuit is associated with one unique load balancing identifier. After the network device allocates the implicit load balancing identifier to the packet, the network device determines a target logic circuit based on the load balancing identifier. The target logic circuit is configured to process the packet to obtain the egress port of the packet.

A mapping relationship between logic circuits and implicit load balancing identifiers, for example, is shown in Table 2.

**Table 2**

| Load balancing configuration information | Matching information | Load balancing identifier | Logic circuit |
|---|---|---|---|
| 1 | Queue 3 | Circuit #1 | Logic circuit #1 |
| 2 | Queue 5 | Circuit #2 | Logic circuit #2 |
| 3 | Queue 7 | Circuit #3 | Logic circuit #3 |

Similar to allocating the explicit load balancing identifier, the network device classifies the packet based on the traffic characteristic information of the packet. Then, the implicit load balancing identifier is allocated to the packet based on a classification result, and the packet is forwarded to a logic circuit (namely, the target logic circuit) corresponding to the load balancing identifier for processing, to obtain the egress port of the packet. Specifically, matching processing is performed on the traffic characteristic information of the packet and matching information of the load balancing configuration information, to determine the load balancing configuration information that matches the traffic characteristic information. Then, the network device allocates the implicit load balancing identifier to the packet, and forwards the packet to the target logic circuit associated with the load balancing identifier.

703: The network device determines the egress port of the packet based on the load balancing identifier of the packet by using the load balancing algorithm corresponding to the packet.

In this embodiment, after the network device allocates the load balancing identifier to the packet, the network device determines, based on the load balancing identifier, the load balancing algorithm corresponding to the packet. Then, the network device determines the egress port of the packet by using the load balancing algorithm corresponding to the packet. The following separately describes specific manners of determining the egress port of the packet based on the explicit load balancing identifier and the implicit load balancing identifier.
A. The load balancing identifier is an explicit identifier.

Specifically, the network device finds, based on the load balancing identifier, the corresponding load balancing configuration information. Then, the network device determines, from the load balancing configuration information, the load balancing algorithm for processing the packet. The network device determines, based on the load balancing algorithm, the hash key member selection control word corresponding to the packet and the hash function selection control word corresponding to the packet. Then, the network device selects a target field from the packet based on the hash key member selection control word corresponding to the packet. The target field is used to build a target hash key composition member of the packet. The network device determines, based on the hash function selection control word corresponding to the packet, a target hash function used for the packet. The network device obtains a target hash value of the packet through computing by using the target hash function and the target hash key composition member. Finally, the network device determines the egress port of the packet based on the target hash value.

In a possible implementation, the network device determines, from the load balancing configuration information based on the load balancing identifier, the hash function selection control word corresponding to the packet and the hash key member selection control word corresponding to the packet.

In another possible implementation, the load balancing identifier directly indicates the hash function selection control word and the hash key member selection control word. The network device determines, based on the load balancing identifier allocated to the packet, the hash function selection control word corresponding to the packet and the hash key member selection control word corresponding to the packet.

B. The load balancing identifier is an implicit identifier.

Specifically, after allocating the implicit load balancing identifier to the packet, the network device forwards the packet to the logic circuit (namely, the target logic circuit) corresponding to the load balancing identifier for processing. The network device obtains, from a register associated with the target logic circuit, the hash function selection control word corresponding to the packet and the hash key member selection control word corresponding to the packet. Then, the network device selects a target field from the packet based on the hash key member selection control word corresponding to the packet. The target field is used to build a target hash key composition member of the packet. The network device determines, based on the hash function selection control word corresponding to the packet, a target hash function used for the packet. The network device obtains a target hash value of the packet through computing by using the target hash function and the target hash key composition member. Finally, the network device determines the egress port of the packet based on the target hash value.

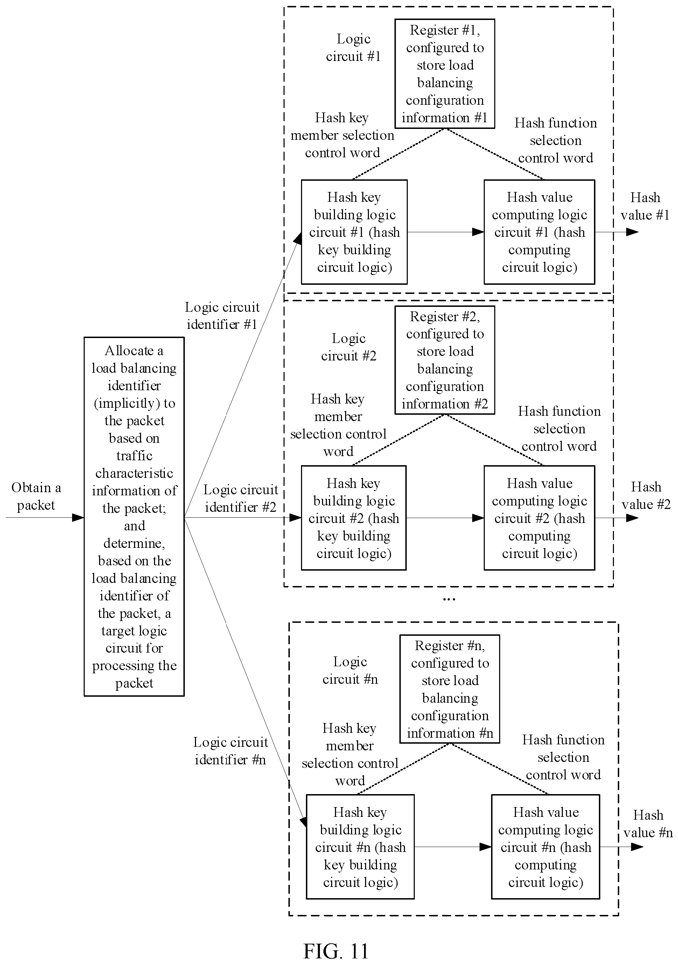

For example, FIG. 11 is a schematic flowchart of load balancing processing according to an embodiment of this application. The network device includes n logic circuits, where n is a positive integer greater than 1. Each logic circuit may be divided into three parts by function: a register, configured to store load balancing configuration information corresponding to the logic circuit; a hash key building logic circuit, configured to build a hash key; and a hash value computing logic circuit, configured to compute a hash value. After the packet enters the target logic circuit (for example, a logic circuit #2), the hash key member selection control word and the hash function selection control word are obtained from a register #2 associated with the logic circuit #2. The target field is selected from the packet by using a hash key building logic circuit #2, and then the target hash key composition member of the packet is built based on the target field. A hash value #2 corresponding to the packet is obtained through computing by using the hash value building logic circuit #2 and the target hash key composition member. The network device determines, based on the hash value #2, the egress port corresponding to the packet.

According to the packet processing method provided in this embodiment of this application, after the packet arrives at the network device, the network device allocates the load balancing identifier of the packet based on the traffic characteristic information of the packet. The load balancing identifier indicates the load balancing algorithm corresponding to the packet. The network device determines the egress port of the packet based on the load balancing identifier of the packet by using the load balancing algorithm corresponding to the packet. The egress port of the packet is used to forward the packet. The network device can allocate different load balancing identifiers to different packets. Then, the network device determines the egress port of the packet based on the load balancing identifier by using the corresponding load balancing algorithm, to implement load balancing processing on the packet. In a scenario in which a plurality of services coexist in a network, the network device may perform corresponding load balancing processing on packets of different services, to improve a throughput of the entire network. In this way, the problem that a current network device supports only L2 or L3 globally unique network load balancing configuration is resolved, so that packets with different traffic characteristics are converged on a same network device, and the throughput of the entire network is maximized. According to this solution, hybrid traffic may be segmented into a plurality of fine-grained sub-traffic topologies, and independent load balancing configuration information is configured for each sub-traffic topology.

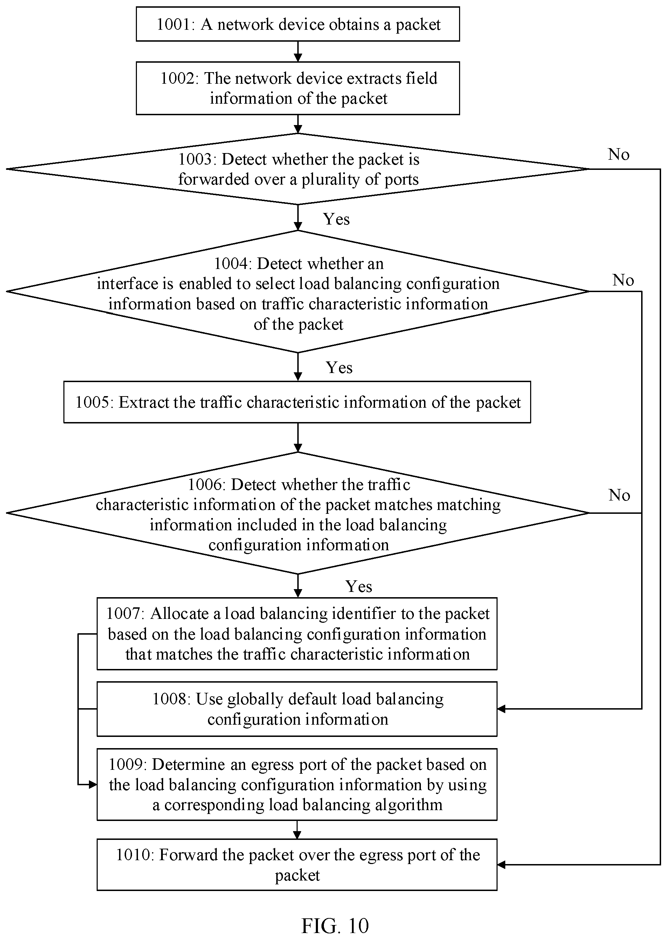

The following describes an application scenario according to an embodiment of this application with reference to the foregoing embodiments. FIG. 10 is a schematic flowchart of an application scenario according to an embodiment of this application. The application scenario provided in this embodiment of this application includes the following steps.

1001: A packet arrives at a network device.

For example, the packet that arrives at the network device includes a first packet and a second packet.

1002: The network device extracts field information of the packet.

1003: Detect whether the packet is forwarded over a plurality of ports, where if the packet is forwarded over a plurality of ports, go to step 1004; or if the packet is not forwarded by a plurality of ports, go to step 1010.

1004: Detect whether an interface is enabled to select load balancing configuration information based on traffic characteristic information of the packet, where if the interface is enabled to select the load balancing configuration information based on the traffic characteristic information of the packet, go to step 1005; or if the interface is not enabled to select the load balancing configuration information based on the traffic characteristic information of the packet, go to step 1008.

1005: Extract the traffic characteristic information of the packet.

For example, the network device extracts traffic characteristic information of the first packet from related information such as field information of the first packet. The network device extracts traffic characteristic information of the second packet from related information such as field information of the second packet.

1006: Detect whether the traffic characteristic information of the packet matches matching information included in the load balancing configuration information, where if the traffic characteristic information of the packet matches the matching information included in the load balancing configuration information, go to step 1007; or if the traffic characteristic information of the packet does not match the matching information included in the load balancing configuration information, go to step 1008. For example, the network device matches the traffic characteristic information of the first packet with matching information #1 included in load balancing configuration information #1. If the matching succeeds, go to step 1007. The network device matches the traffic characteristic information of the second packet with matching information #2 included in load balancing configuration information #2. If the matching succeeds, go to step 1007.

1007: Allocate a load balancing identifier to the packet based on the load balancing configuration information that matches the traffic characteristic information. After step 1007, go to step 1009.

For example, the network device allocates a first load balancing identifier to the first packet, and the first load balancing identifier corresponds to a first load balancing algorithm. The load balancing configuration information #1 indicates the first load balancing algorithm, and the load balancing configuration information #1 includes the first load balancing identifier. The network device allocates a second load balancing identifier to the second packet, and the second load balancing identifier corresponds to a second load balancing algorithm. The load balancing configuration information #2 indicates the second load balancing algorithm, and the load balancing configuration information #2 includes the second load balancing identifier. The first load balancing identifier is different from the second load balancing identifier, and the first load balancing algorithm is different from the second load balancing algorithm.

1008: Use globally default load balancing configuration information. After step 1008, go to step 1009.

1009: Determine an egress port of the packet based on the load balancing configuration information by using the corresponding load balancing algorithm. Specifically, based on the load balancing configuration, a Hash key is built, and then a Hash value is computed. Load balancing is performed based on the computed Hash value to determine the egress port of the packet.

For example, the network device performs load balancing processing on the first packet based on the first load balancing algorithm indicated by the load balancing configuration information #1, to determine an egress port of the first packet. The network device performs load balancing processing on the second packet based on the second load balancing algorithm indicated by the load balancing configuration information #2, to determine an egress port of the second packet.

1010: Forward the packet over the egress port of the packet, to implement load balancing processing on traffic.

The foregoing mainly describes the solutions provided in embodiments of this application from a perspective of the method. It may be understood that, to implement the foregoing functions, the network device includes a corresponding hardware structure and/or software module for implementing each function. A person of ordinary skill in the art should easily be aware that, in combination with the examples described in embodiments disclosed in this specification, modules, algorithms, and steps may be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the network device may be divided into functional modules according to the foregoing method example. For example, various functional modules corresponding to various functions may be obtained through division, or two or more functions are integrated into one processing module. The integrated module may be implemented in a form of hardware, or may be implemented in a form of a software functional module. It should be noted that, in embodiments of this application, division into the modules is an example and is merely logical function division, and may be other division during actual implementation.

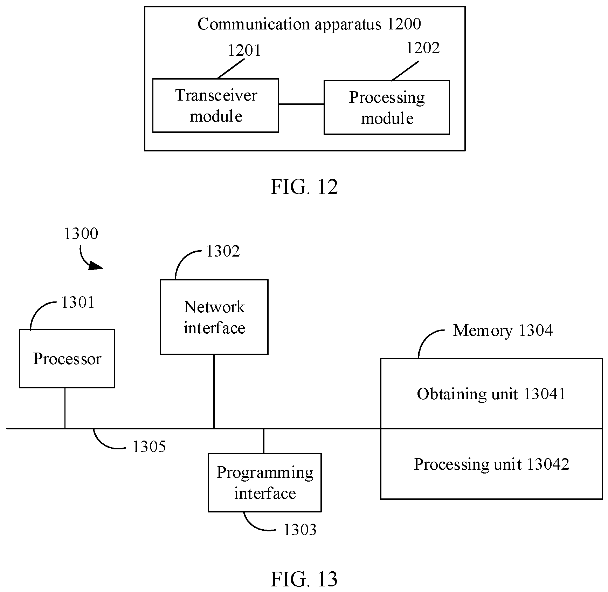

The following describes a communication apparatus in embodiments of this application. The communication apparatus described below has any function of the network device in the foregoing method embodiments. The communication apparatus in this application may be a network device, for example, a switch or a router, or may be some components on the network device, for example, an interface board, a line card, or a chip on the network device, or may be a functional module on the network device, or may be a chip system configured to implement the method in this application. This is not specifically limited in embodiments of this application. Communication apparatuses may be directly connected, for example, but not limited to, by using an Ethernet cable or an optical cable. When the communication apparatus is a chip system, a transceiver module in the communication apparatus may be, for example, an interface circuit in the chip system, and a processing module may be, for example, a processing circuit that is configured to perform a processing operation and that is in the chip system. FIG. 12 is a diagram of a structure of a communication apparatus 1200 according to an embodiment of this application. As shown in FIG. 12, the communication apparatus 1200 includes a transceiver module 1201, configured to perform step 701, and a processing module 1202, configured to perform step 702 or 703.

The communication apparatus 1200 may correspond to the network device in the foregoing method embodiments. The units in the communication apparatus 1200 and the foregoing other operations and/or functions are respectively for implementing the steps and methods implemented by the network device in the method embodiments. For specific details, refer to the foregoing method embodiments. For brevity, details are not described herein again.

When the communication apparatus 1200 executes the foregoing method embodiments, division into the foregoing functional modules is merely used as an example for description. During actual application, the foregoing functions may be allocated to different functional modules for implementation according to a requirement. In other words, an internal structure of the communication apparatus 1200 is divided into different functional modules, to implement all or some of the functions described above. In addition, the communication apparatus 1200 provided in the foregoing embodiment and the method in the embodiment corresponding to FIG. 7 pertain to a same concept. For a specific implementation process thereof, refer to the foregoing method embodiments. Details are not described herein again.

Although a communication apparatus 1300 in FIG. 13 shows some specific features, a person skilled in the art may be aware, from embodiments of this application, that, for brevity, FIG. 13 does not show various other features, to avoid confusing more related aspects of implementations disclosed in embodiments of this application. For this purpose, for example, in some implementations, the communication apparatus 1300 includes one or more processors (for example, a CPU) 1301, a network interface 1302, a programming interface 1303, a memory 1304, and one or more communication buses 1305 that are configured to interconnect various components. In some other implementations, some functional components or units may be omitted in or added to the communication apparatus 1300 based on the foregoing example.

In some implementations, the network interface 1302 is configured to connect to one or more other communication apparatuses/servers in a network system. In some implementations, the communication bus 1305 includes a circuit that interconnects and controls communication between system components. The memory 1304 may include a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. Alternatively, the memory 1304 may include a volatile memory. The volatile memory may be a random access memory (random access memory, RAM), and is used as an external cache.

In some implementations, the memory 1304 or a non-transitory computer-readable storage medium of the memory 1304 stores the following programs, modules, and data structures, or subsets thereof, for example, includes a transceiver unit (not shown in the figure), an obtaining unit 13041, and a processing unit 13042.

In a possible embodiment, the communication apparatus 1300 may have any function of the network device in the method embodiment corresponding to FIG. 7.

It should be understood that the communication apparatus 1300 corresponds to the network device or a control and management apparatus in the foregoing method embodiments, and the modules in the communication apparatus 1300 and the foregoing other operations and/or functions are respectively for implementing the steps and methods implemented by the network device or the control and management apparatus in the foregoing method embodiments. For specific details, refer to the foregoing method embodiment corresponding to FIG. 7. For brevity, details are not described herein again.

It should be understood that, in this application, the network interface 1302 of the communication apparatus 1300 may perform data receiving and sending operations, or a processor may invoke program code in the memory, and implement functions of the transceiver unit in cooperation with the network interface 1302 when required.

In various implementations, the communication apparatus 1300 is configured to perform the service protection method provided in embodiments of this application, for example, perform the service protection method corresponding to the embodiment shown in FIG. 7.

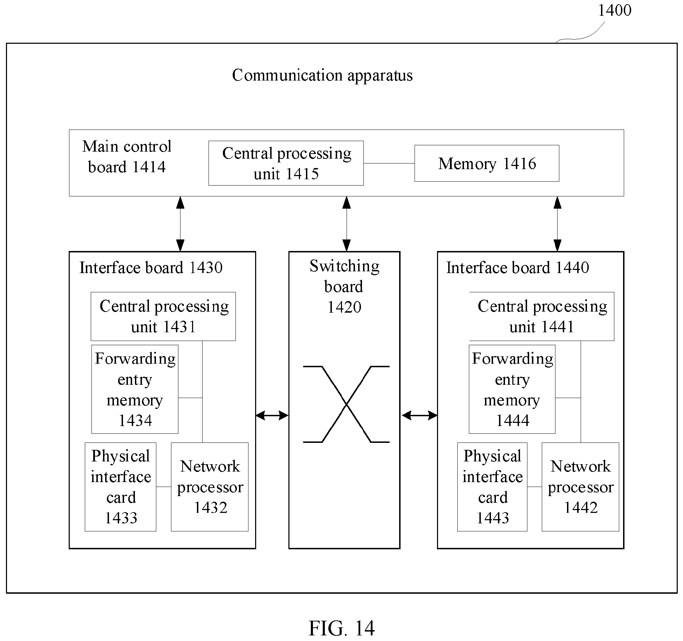

A specific structure of the communication apparatus in FIG. 13 in this application may be shown in FIG. 14.

FIG. 14 is a diagram of a structure of a communication apparatus 1400 according to an embodiment of this application. The communication apparatus 1400 includes a main control board 1414 and an interface board 1430.

The main control board 1414 is also referred to as a main processing unit (main processing unit, MPU) or a route processor (route processor). The main control board 1414 is configured to control and manage components in the communication apparatus 1400, including functions of route computing, device management, device maintenance, and protocol processing. The main control board 1414 includes a central processing unit 1415 and a memory 1416.

The interface board 1430 is also referred to as a line processing unit (line processing unit, LPU), a line card (line card), or a service board. The interface board 1430 is configured to provide various service interfaces and forward a data packet. The service interfaces include but are not limited to an Ethernet interface, a POS (Packet over SONET/SDH) interface, and the like. The interface board 1430 includes a central processing unit 1431, a network processor 1432, a forwarding entry memory 1434, and a physical interface card (physical interface card, PIC) 1433.

The central processing unit 1431 on the interface board 1430 is configured to control and manage the interface board 1430 and communicate with the central processing unit 1415 on the main control board 1414.

The network processor 1432 is configured to implement packet forwarding processing. A form of the network processor 1432 may be a chip.

The physical interface card 1433 is configured to implement a physical layer interconnection function. Original traffic enters the interface board 1430 from the physical interface card 1433, and a processed packet is sent out from the physical interface card 1433. The physical interface card 1433 includes at least one physical interface. The physical interface is also referred to as a physical interface, and the physical interface may be a flexible Ethernet (Flexible Ethernet, FlexE) physical interface. The physical interface card 1433, also referred to as a subcard, may be installed on the interface board 1430, and is responsible for converting an optical/electrical signal into a packet, performing validity check on the packet, and forwarding the packet to the network processor 1432 for processing. In some embodiments, the central processing unit 1431 on the interface board 1430 may also perform a function of the network processor 1432, for example, implement software forwarding based on a general-purpose CPU. In this case, the network processor 1432 is not required in the interface board 1430.

Optionally, the communication apparatus 1400 includes a plurality of interface boards. For example, the communication apparatus 1400 further includes an interface board 1440. The interface board 1440 includes a central processing unit 1441, a network processor 1442, a forwarding entry memory 1444, and a physical interface card 1443.

Optionally, the communication apparatus 1400 further includes a switching board 1420. The switching board 1420 may also be referred to as a switch fabric unit (switch fabric unit, SFU). When the communication apparatus has a plurality of interface boards 1430, the switching board 1420 is configured to complete data exchange between the interface boards. For example, the interface board 1430 and the interface board 1440 may communicate with each other through the switching board 1420.

The main control board 1414 is coupled with the interface board. For example, the main control board 1414, the interface board 1430, the interface board 1440, and the switching board 1420 are connected to each other by using a system bus and/or a system backplane to implement interworking. In a possible implementation, an inter-process communication protocol (inter-process communication, IPC) channel is established between the main control board 1414 and the interface board 1430, and the main control board 1414 and the interface board 1430 communicate with each other through the IPC channel.

Logically, the communication apparatus 1400 includes a control plane and a forwarding plane. The control plane includes the main control board 1414 and the central processing unit 1431. The forwarding plane includes components used for forwarding, for example, the forwarding entry memory 1434, the physical interface card 1433, and the network processor 1432. The control plane performs functions such as publishing a route, generating a forwarding table, processing signaling and protocol packets, and configuring and maintaining a device status. The control plane delivers the generated forwarding table to the forwarding plane. On the forwarding plane, the network processor 1432 performs, based on the forwarding table delivered by the control plane, table lookup and forwarding on a packet received by the physical interface card 1433. The forwarding table delivered by the control plane may be stored in the forwarding entry memory 1434. In some embodiments, the control plane and the forwarding plane may be completely separated, and are not on a same device.

It should be understood that the transceiver unit in the communication apparatus 1300 may be equivalent to the physical interface card 1433 or the physical interface card 1443 in the communication apparatus 1400, and the obtaining unit 13041 and the processing unit 13042 in the communication apparatus 1300 may be equivalent to the central processing unit 1415 or the central processing unit 1431 in the communication apparatus 1400, or may be equivalent to program code or instructions stored in the memory 1416.

It should be understood that, in this embodiment of this application, an operation on the interface board 1440 is the same as an operation on the interface board 1430. For brevity, details are not described again. It should be understood that the communication apparatus 1400 in this embodiment may correspond to the network device in the foregoing method embodiments. The main control board 1414, the interface board 1430, and/or the interface board 1440 in the communication apparatus 1400 may implement functions and/or various steps performed by the network device in the foregoing method embodiments. For brevity, details are not described herein again.

It should be noted that there may be one or more main control boards. When there are a plurality of main control boards, a primary main control board and a secondary main control board may be included. There may be one or more interface boards, and the communication apparatus with a stronger data processing capability provides more interface boards. There may also be one or more physical interface cards on the interface board. There may be no switching board or there may one or more switching boards. When there are a plurality of switching boards, load balancing and redundancy backup may be implemented together. In a centralized forwarding architecture, the communication apparatus may not need a switching board, and the interface board provides a function of processing service data of an entire system. In a distributed forwarding architecture, the communication apparatus may include at least one switching board, and exchange data between a plurality of interface boards through the switching board, to provide a large-capacity data exchange and processing capability. Optionally, the communication apparatus may alternatively be in a form in which there is only one board card. To be specific, there is no switching board, and functions of the interface board and the main control board are integrated on the board card. In this case, the central processing unit on the interface board and the central processing unit on the main control board may be combined into one central processing unit on the board card, to perform functions obtained by combining the two central processing units. Which architecture is specifically used depends on a specific networking deployment scenario. This is not uniquely limited herein.

In some possible embodiments, the network device may be implemented as a virtualization device. The virtualization device may be a virtual machine (virtual machine, VM), a virtual router, or a virtual switch that runs a program used for sending a packet. The virtualization device is deployed on a hardware device (for example, a physical server). For example, the network device may be implemented based on a general-purpose physical server in combination with a network function virtualization (network functions virtualization, NFV) technology.

It should be understood that the communication apparatuses in the foregoing product forms separately have any function of the network device in the foregoing method embodiments. Details are not described herein again.

An embodiment of this application further provides a computer-readable storage medium, including instructions. When the instructions are run on a computer, the computer controls a network apparatus to perform any implementation described in the foregoing method embodiments.

An embodiment of this application further provides a computer program product. The computer program product includes computer program code. When the computer program code is run on a computer, the computer is enabled to perform any implementation described in the foregoing method embodiments.

An embodiment of this application further provides a computer program product. When the computer program product runs on a communication apparatus, the communication apparatus is enabled to perform the method performed by the network device in the method embodiment corresponding to FIG. 7.

An embodiment of this application further provides a chip system, including a processor and an interface circuit. The interface circuit is configured to receive instructions and transmit the instructions to the processor. The processor is configured to implement the method in any one of the foregoing method embodiments.

Optionally, the chip system further includes a memory, and there may be one or more processors in the chip system. The processor may be implemented by hardware, or may be implemented by software. When being implemented by hardware, the processor may be a logic circuit, an integrated circuit, or the like. When being implemented by software, the processor may be a general-purpose processor, and the method in any one of the foregoing method embodiments is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

The communication apparatuses in the foregoing product forms separately have any function of the network device in the foregoing method embodiments. Details are not described herein again.

The foregoing describes embodiments of this application in detail. Steps in the methods in embodiments of this application may be sequentially scheduled, combined, or deleted according to an actual requirement. Modules in the apparatus in embodiments of this application may be divided, combined, or deleted according to an actual requirement.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout the entire specification does not necessarily refer to a same embodiment. In addition, these particular features, structures, or characteristics may be combined in one or more embodiments in any appropriate manner. It should be understood that sequence numbers of the foregoing processes do not mean execution sequences in various embodiments of this application. The execution sequences of the processes should be determined according to functions and internal logic of the processes, and should not constitute any limitation on the implementation processes of embodiments of this application.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that, in embodiments of this application, "B corresponding to A" indicates that B is associated with A, and B may be determined based on A. However, it should be further understood that determining B based on A does not mean that B is determined based only on A, and B may alternatively be determined based on A and/or other information.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected according to an actual requirement to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

## Claims

1. A packet processing method, comprising:
after a packet arrives at a network device,
allocating, by the network device, a load balancing identifier of the packet based on traffic characteristic information of the packet, wherein the load balancing identifier indicates a load balancing algorithm corresponding to the packet; and
determining, by the network device, an egress port of the packet based on the load balancing identifier of the packet by using the load balancing algorithm corresponding to the packet, wherein the egress port of the packet is used to forward the packet.

2. The method according to claim 1, wherein the filling, by the network device, the load balancing identifier into the packet comprises:
filling, by the network device, the load balancing identifier into a packet descriptor of the packet, wherein the packet descriptor is used to record packet header information of the packet.

3. The method according to claim 1 or 2, wherein the determining, by the network device, an egress port of the packet based on the load balancing identifier of the packet by using the load balancing algorithm corresponding to the packet comprises:
determining, by the network device based on the load balancing identifier, the load balancing algorithm corresponding to the packet;
determining, by the network device based on the load balancing algorithm corresponding to the packet, a target hash function used for the packet and a target hash key composition member of the packet;
obtaining, by the network device, a target hash value through computing based on the target hash function and the target hash key composition member; and
determining, by the network device, the egress port of the packet based on the target hash value.

4. The method according to claim 3, wherein determining, by the network device based on the load balancing identifier, the target hash function used for the packet and the target hash key composition member of the packet comprises:
determining, by the network device based on the load balancing identifier, a hash function selection control word corresponding to the packet and a hash key member selection control word corresponding to the packet;
determining, by the network device based on the hash function selection control word corresponding to the packet, the target hash function used for the packet; and
selecting, by the network device, a target field from the packet based on the hash key member selection control word corresponding to the packet, wherein the target field is used to build the target hash key composition member of the packet.

5. The method according to claim 1, wherein the determining, by the network device, an egress port of the packet based on the load balancing identifier of the packet by using the load balancing algorithm corresponding to the packet comprises:
determining, by the network device, a target logic circuit based on the load balancing identifier of the packet, wherein the target logic circuit is associated with the load balancing identifier of the packet, and the target logic circuit runs the load balancing algorithm corresponding to the packet; and
processing, by the network device, the packet by using the target logic circuit, and determining the egress port of the packet.

6. The method according to claim 5, wherein the determining, by the network device, a target logic circuit based on the load balancing identifier of the packet comprises:
determining, by the network device, the target logic circuit from a plurality of logic circuits comprised in the network device, wherein the plurality of logic circuits correspond to a plurality of load balancing identifiers, the plurality of load balancing identifiers comprise the load balancing identifier of the packet, and the logic circuit runs the load balancing algorithm corresponding to the load balancing identifier.

7. The method according to claim 5 or 6, wherein the processing, by the network device, the packet by using the target logic circuit, and determining the egress port of the packet comprises:
processing, by the network device, the packet by using the target logic circuit, and determining a target hash function used for the packet and a target hash key composition member of the packet;
obtaining, by the network device, a target hash value through computing based on the target hash function and the target hash key composition member; and
determining, by the network device, the egress port of the packet based on the target hash value.

8. The method according to claim 7, wherein the processing, by the network device, the packet by using the target logic circuit, and determining a target hash function used for the packet and a target hash key composition member of the packet comprises:
obtaining, by the network device from a register associated with the target logic circuit, a hash function selection control word corresponding to the packet and a hash key member selection control word corresponding to the packet;
selecting, by the network device, a target field from the packet based on the hash key member selection control word corresponding to the packet, wherein the target field is used to build the target hash key composition member of the packet; and
determining, by the network device based on the hash function selection control word corresponding to the packet, the target hash function used for the packet.

9. The method according to any one of claims 1 to 8, wherein the method further comprises:
receiving, by the network device, a first instruction; and
configuring, by the network device, load balancing configuration information based on the first instruction, wherein the load balancing configuration information indicates an association relationship between the traffic characteristic information and the load balancing algorithm.

10. The method according to any one of claims 1 to 9, wherein the load balancing identifier comprises any one or more of the following:
identification information of the load balancing configuration information, a logic circuit identifier, a hash key member selection control word, or a hash function selection control word, wherein
the load balancing configuration information indicates the association relationship between the traffic characteristic information and the load balancing algorithm.

11. The method according to claim 9 or 10, wherein the load balancing configuration information comprises any one or more of the following information:
the identification information of the load balancing configuration information;
the load balancing algorithm corresponding to the load balancing configuration information;
matching information, wherein the matching information belongs to the traffic characteristic information;
configuration information for hash key composition member selection; or
configuration information for hash function selection.

12. The method according to any one of claims 1 to 11, wherein the traffic characteristic information of the packet comprises one or more of the following:
differentiated services code point DSCP information of the packet, priority information of the packet, ingress port information of the packet, virtual local area network VLAN information of the packet, ingress port group information of the packet, egress port information of the packet, egress port group information of the packet, or virtual routing and forwarding VRF table information of the packet.

13. The method according to any one of claims 1 to 12, wherein an application scenario of the load balancing algorithm is any one of the following:
equal-cost multi-path routing ECMP, weight-cost multi-path routing WCMP, or link aggregation LAG.

14. The method according to any one of claims 1 to 13, wherein
the packet comprises a first packet and a second packet, and traffic characteristic information of the first packet is different from traffic characteristic information of the second packet; and
the allocating, by the network device, a load balancing identifier of the packet based on traffic characteristic information of the packet comprises:
allocating, by the network device, a first load balancing identifier of the first packet based on the traffic characteristic information of the first packet, wherein the first load balancing identifier corresponds to a first load balancing algorithm; and
allocating, by the network device, a second load balancing identifier of the second packet based on the traffic characteristic information of the second packet, wherein the second load balancing identifier corresponds to a second load balancing algorithm, wherein
the first load balancing identifier is different from the second load balancing identifier, and the first load balancing algorithm is different from the second load balancing algorithm.

15. A communication apparatus, used in a network device and comprising:
a transceiver module at which a packet arrives; and
a processing module, configured to allocate a load balancing identifier of the packet based on traffic characteristic information of the packet, wherein the load balancing identifier indicates a load balancing algorithm corresponding to the packet, wherein
the processing module is further configured to determine an egress port of the packet based on the load balancing identifier of the packet by using the load balancing algorithm corresponding to the packet, wherein the egress port of the packet is used to forward the packet.

16. The communication apparatus according to claim 15, wherein
the processing module is further configured to fill the load balancing identifier into a packet descriptor of the packet, wherein the packet descriptor is used to record packet header information of the packet.

17. The communication apparatus according to claim 15 or 16, wherein
the processing module is further configured to determine, based on the load balancing identifier, the load balancing algorithm corresponding to the packet;
the processing module is further configured to determine, based on the load balancing algorithm corresponding to the packet, a target hash function used for the packet and a target hash key composition member of the packet;
the processing module is further configured to obtain a target hash value through computing based on the target hash function and the target hash key composition member; and
the processing module is further configured to determine the egress port of the packet based on the target hash value.

18. The communication apparatus according to claim 17, wherein
the processing module is further configured to determine, based on the load balancing identifier, a hash function selection control word corresponding to the packet and a hash key member selection control word corresponding to the packet;
the processing module is further configured to determine, based on the hash function selection control word corresponding to the packet, the target hash function used for the packet; and
the processing module is further configured to select a target field from the packet based on the hash key member selection control word corresponding to the packet, wherein the target field is used to build the target hash key composition member of the packet.

19. The communication apparatus according to claim 15, wherein
the processing module is further configured to determine a target logic circuit based on the load balancing identifier of the packet, wherein the target logic circuit is associated with the load balancing identifier of the packet, and the target logic circuit runs the load balancing algorithm corresponding to the packet; and
the processing module is further configured to process the packet by using the target logic circuit, and determine the egress port of the packet.

20. The communication apparatus according to claim 19, wherein
the processing module is further configured to determine the target logic circuit from a plurality of logic circuits comprised in the network device, wherein the plurality of logic circuits correspond to a plurality of load balancing identifiers, the plurality of load balancing identifiers comprise the load balancing identifier of the packet, and the logic circuit runs the load balancing algorithm corresponding to the load balancing identifier.

21. The communication apparatus according to claim 19 or 20, wherein
the processing module is further configured to process the packet by using the target logic circuit, and determine a target hash function used for the packet and a target hash key composition member of the packet;
the processing module is further configured to obtain a target hash value through computing based on the target hash function and the target hash key composition member; and
the processing module is further configured to determine the egress port of the packet based on the target hash value.

22. The communication apparatus according to claim 21, wherein
the transceiver module is further configured to obtain, from a register associated with the target logic circuit, a hash function selection control word corresponding to the packet and a hash key member selection control word corresponding to the packet;
the processing module is further configured to select a target field from the packet based on the hash key member selection control word corresponding to the packet, wherein the target field is used to build the target hash key composition member of the packet; and
the processing module is further configured to determine, based on the hash function selection control word corresponding to the packet, the target hash function used for the packet.

23. The communication apparatus according to any one of claims 15 to 22, wherein
the transceiver module is further configured to receive a first instruction; and
the processing module is further used to configure load balancing configuration information based on the first instruction, wherein the load balancing configuration information indicates an association relationship between the traffic characteristic information and the load balancing algorithm.

24. The communication apparatus according to any one of claims 15 to 23, wherein the load balancing identifier comprises any one or more of the following:
identification information of the load balancing configuration information, a logic circuit identifier, a hash key member selection control word, or a hash function selection control word, wherein
the load balancing configuration information indicates the association relationship between the traffic characteristic information and the load balancing algorithm.

25. The communication apparatus according to claim 23 or 24, wherein the load balancing configuration information comprises any one or more of the following information:
the identification information of the load balancing configuration information;
the load balancing algorithm corresponding to the load balancing configuration information;
matching information, wherein the matching information belongs to the traffic characteristic information;
configuration information for hash key composition member selection; or
configuration information for hash function selection.

26. The communication apparatus according to any one of claims 15 to 25, wherein the traffic characteristic information of the packet comprises one or more of the following:
differentiated services code point DSCP information of the packet, priority information of the packet, ingress port information of the packet, virtual local area network VLAN information of the packet, ingress port group information of the packet, egress port information of the packet, egress port group information of the packet, or virtual routing and forwarding VRF table information of the packet.

27. The communication apparatus according to any one of claims 15 to 26, wherein an application scenario of the load balancing algorithm is any one of the following:
equal-cost multi-path routing ECMP, weight-cost multi-path routing WCMP, or link aggregation LAG.

28. The communication apparatus according to any one of claims 15 to 27, wherein
the packet comprises a first packet and a second packet, and traffic characteristic information of the first packet is different from traffic characteristic information of the second packet;
the processing module is specifically configured to allocate a first load balancing identifier of the first packet based on the traffic characteristic information of the first packet, wherein the first load balancing identifier corresponds to a first load balancing algorithm;
the processing module is specifically configured to allocate a second load balancing identifier of the second packet based on the traffic characteristic information of the second packet, wherein the second load balancing identifier corresponds to a second load balancing algorithm; and
the first load balancing identifier is different from the second load balancing identifier, and the first load balancing algorithm is different from the second load balancing algorithm.

29. A communication apparatus, comprising:
a communication interface; and
a processor connected to the communication interface, wherein based on the communication interface and the processor, the controller is enabled to perform the method according to any one of claims 1 to 14.

30. A communication system, wherein the communication system comprises a communication apparatus, and the communication apparatus is configured to perform the method according to any one of claims 1 to 14.

31. A computer-readable storage medium, comprising instructions, wherein when the instructions are executed by a processor, the method according to any one of claims 1 to 14 is implemented.

32. A computer program product, comprising a program, wherein when the program is executed by a processor, the method according to any one of claims 1 to 14 is implemented.
